# EUROPEAN PATENT APPLICATION

(11) **EP 2 549 232 A2**
(43) Date of publication of application: **23.01.2013**
(21) Application number: 12175077.2
(22) Date of filing: 05.07.2012
(51) Int. Cl.: G01C 21/36

(54) **Travel guidance system, travel guidance method, and computer program product**

(30) Priority: 20.07.2011 JP 2011158819
(71) Applicant: AISIN AW CO., LTD., Anjo-shi, Aichi 444-1192 (JP)
(72) Inventor: Hosotani, Nobuhiro, Anjo-shi,, Aichi 444-1192 (JP); Mori, Toshihiro, Anjo-shi,, Aichi 444-1192 (JP); Sato, Yuji, Anjo-shi,, Aichi 444-1192 (JP)
(74) Representative: TBK

(57) **Abstract**

A travel guidance system is adapted to set a navigation route and a guidance junction thereon, to set a marker located closer to a departure place of the route than the guidance junction and used for guidance on the guidance junction as a reference marker, to set a marker located near the guidance junction and used for guidance on the guidance junction as a guidance marker, to acquire positions of the reference marker and the guidance marker, to set the guidance on the guidance junction on the basis of the positions of the reference marker and the guidance marker, and to provide the guidance on the guidance junction on the basis of the set guidance, wherein the guidance includes a first phrase specifying a positional relationship between a movable body and the reference marker and a second phrase specifying a positional relationship between the reference marker and the guidance marker.

## Description

### BACKGROUND OF THE INVENTION

The present invention relates to travel guidance systems, travel guidance methods, and computer program products for guiding movable bodies along navigation routes.

### Description of the Related Art

Recently, navigation systems that provide drivers with travel guidance have been installed in many vehicles so that the drivers can easily reach desired destinations. The term "navigation systems" herein refer to devices that can: detect the current positions of vehicles in which the navigation systems are installed using, for example, GPS receivers; acquire map data corresponding to the current positions via recording media such as DVD-ROMs and HDDs or via networks; and display the map data on liquid crystal monitors. Such a navigation system has a route search function of searching for an optimum route from a departure place to a destination on the basis of a desired destination input by a user. The navigation system displays a navigation route set on the basis of the search results on a display screen, and provides the user with guidance using voice and the display screen when the vehicle approaches junctions at which the user is to be instructed to, for example, turn right or left (hereinafter referred to as "guidance junctions") so as to reliably guide the user to the desired destination. Recently, some devices such as cellular phones, personal digital assistants (PDAs), and personal computers have also been provided with functions similar to those of the navigation systems, and are capable of providing guidance described as above for pedestrians and two-wheeled vehicles in addition to the vehicles.

When a user is instructed to, for example, turn right or left at a guidance junction, it is necessary for the user to correctly determine the guidance junction. In order for the user to correctly determine the guidance junction, guidance using markers existing between the vehicle and the guidance junction may be provided for the user. The markers include, for example, traffic lights, intersections, and landmarks (stores, signboards of stores, and structures). For example, in a technology described in Japanese Patent Application Publication No. 10-274544 (Page 5), guidance on a guidance junction is provided using the number of traffic lights existing between the current vehicle position and the guidance junction and acting as markers.

### SUMMARY OF THE INVENTION

A user guided using markers as in the technology described in Japanese Patent Application Publication No. 10-274544 sometimes cannot determine a guidance junction correctly. In particular, in cases where markers used for guidance are far from the user or where a large number of markers exist, for example, the user cannot easily determine the markers provided during the guidance, and as a result cannot correctly determine the guidance junction.

The present invention is accomplished to solve the above-described problems, and an object of the present invention is to provide a travel guidance system, a travel guidance method, and a computer program product enabling a user to easily determine the position of a guidance marker from guidance on the basis of a reference marker and as a result enabling the user to correctly determine a guidance junction from the markers.

To achieve the above-described object, a travel guidance system according to a first aspect of the present invention includes: a navigation-route setting unit that sets a navigation route along which a movable body is guided and a guidance junction on the navigation route; a reference-marker setting unit that sets a marker located closer to a departure place of the navigation route than the guidance junction and used for guidance on the guidance junction as a reference marker; a guidance-marker setting unit that sets a marker located near the guidance junction and used for the guidance on the guidance junction as a guidance marker; a marker-position acquiring unit that acquires a position of the reference marker and a position of the guidance marker; a guidance setting unit that sets the guidance on the guidance junction on the basis of the position of the reference marker and the position of the guidance marker; and a junction guiding unit that provides the guidance on the guidance junction on the basis of the guidance set by the guidance setting unit. The guidance setting unit sets the guidance including a first phrase specifying a positional relationship between the movable body and the reference marker and a second phrase specifying a positional relationship between the reference marker and the guidance marker.
The term "movable body" herein includes pedestrians and two-wheeled vehicles in addition to vehicles.
The term "guidance junction" herein corresponds to a junction at which a user of the system is instructed to, for example, turn right or left while the movable body is guided along the navigation route.
The term "markers" herein refers to objects that can act as markers for a user, and includes, for example, traffic lights, intersections, and landmarks (stores, signboards of stores, and structures).
The term "phrase" herein corresponds to a group of words.

According to a second aspect of the present invention, in the travel guidance system according to the first aspect, the guidance setting unit is adapted to set the guidance such that the first phrase is output after the second phrase.

According to a third aspect of the present invention, in the travel guidance system according to the first or second aspect, the reference-marker setting unit is adapted to set, when a plurality of objects that can be the reference marker are located closer to the departure place of the navigation route than the guidance junction, the object closest to the departure place as the reference marker.

According to a fourth aspect of the present invention, in the travel guidance system according to any one of the first to third aspects, objects that can be the reference marker and the guidance marker are classified into a plurality of types, and the guidance setting unit is adapted to set a phrase specifying a type of the reference marker in addition to the positional relationship between the movable body and the reference marker as the first phrase, and is adapted to set a phrase specifying a type of the guidance marker in addition to the positional relationship between the reference marker and the guidance marker as the second phrase.

According to a fifth aspect of the present invention, in the travel guidance system according to the fourth aspect, the guidance setting unit is adapted to set, when another object of which type is the same as the type of the guidance marker exists between the reference marker and the guidance marker, a phrase specifying the number of the objects existing between the reference marker and the guidance marker as the second phrase.

According to a sixth aspect of the present invention, in the travel guidance system according to any one of the first to fifth aspects, the guidance setting unit is adapted to set, when the type of the reference marker and the type of the guidance marker are the same or when the type of the reference marker and the type of the guidance marker are not the same and the guidance marker is a traffic light or a junction, a phrase formed by adding a phrase indicating that the movable body is passing or is going to pass through the reference marker before or after a phrase specifying the type of the reference marker as the first phrase.

According to a seventh aspect of the present invention, in the travel guidance system according to any one of the first to sixth aspects, the guidance setting unit is adapted to set, when passage of the movable body through the reference marker will not be completed while the guidance is being provided by the junction guiding unit, a phrase indicating that the movable body is going to pass through the reference marker as the first phrase.

According to an eighth aspect of the present invention, in the travel guidance system according to any one of the first to seventh aspects, the guidance setting unit is adapted to set, when passage of the movable body through the reference marker will be completed while the guidance is being provided by the junction guiding unit, a phrase indicating that the movable body is passing through the reference marker at the moment as the first phrase.

A travel guidance method according to a ninth aspect of the present invention includes the steps of: setting a navigation route along which a movable body is guided and a guidance junction on the navigation route; setting a marker located closer to a departure place of the navigation route than the guidance junction and used for guidance on the guidance junction as a reference marker; setting a marker located near the guidance junction and used for the guidance on the guidance junction as a guidance marker; acquiring a position of the reference marker and a position of the guidance marker; setting the guidance on the guidance junction on the basis of the position of the reference marker and the position of the guidance marker; and providing the guidance on the guidance junction on the basis of the guidance set in the guidance setting step. The guidance setting step sets the guidance including a first phrase specifying a positional relationship between the movable body and the reference marker and a second phrase specifying a positional relationship between the reference marker and the guidance marker.

A computer program product according to a tenth aspect of the present invention includes a program for a processing device, comprising software code portions for performing the steps according to the ninth aspect when the program is run on the processing device.

The computer program product according to the tenth aspect may comprise a computer-readable medium on which the software code portions are stored, wherein the program may be directly loadable into an internal memory of the processing device.

In the travel guidance system according to the first aspect having the above-described structure, the guidance marker and the reference marker acting as markers used for the guidance on the guidance junction are set, and the guidance on the guidance junction is provided using the guidance including the first phrase specifying the positional relationship between the movable body and the reference marker and the second phrase specifying the positional relationship between the reference marker and the guidance marker. The guidance enables the user to easily determine the position of the guidance marker on the basis of the reference marker if the guidance marker is far from the user or if a large number of markers exist. As a result, the user can correctly determine the guidance junction from the markers.

In the travel guidance system according to the second aspect, the guidance is set such that the first phrase is output after the second phrase. This enables the user to easily discriminate the reference marker and the guidance marker from each other and to easily determine the guidance marker on the basis of the reference marker output after the guidance marker.

In the travel guidance system according to the third aspect, when a plurality of objects that can act as the reference marker are located closer to the departure place of the navigation route than the guidance junction, the object closest to the departure place is set as the reference marker. This enables the user to determine the guidance marker on the basis of the marker most visible to the user.

In the travel guidance system according to the fourth aspect, the phrase specifying the type of the reference marker in addition to the positional relationship between the movable body and the reference marker is set as the first phrase, and the phrase specifying the type of the guidance marker in addition to the positional relationship between the reference marker and the guidance marker is set as the second phrase. This enables the user to determine the markers more reliably without confusing other markers with the reference marker or the guidance marker.

In the travel guidance system according to the fifth aspect, when another object of which type is the same as that of the guidance marker exists between the reference marker and the guidance marker, the phrase specifying the number of the objects existing between the reference marker and the guidance marker is set as the second phrase. This enables the user to reliably determine the guidance marker without confusing the other objects with the guidance marker if the other objects of which type is the same as that of the guidance marker exist between the reference marker and the guidance marker.

In the travel guidance system according to the sixth aspect, when the type of the reference marker and that of the guidance marker are the same or when the type of the reference marker and that of the guidance marker are not the same and the guidance marker is a traffic light or a junction, the phrase formed by adding the phrase indicating that the movable body is passing or is going to pass through the reference marker before or after the phrase specifying the type of the reference marker is set as the first phrase. This eliminates the possibility that the reference marker will be incorrectly identified as the marker at which the user is instructed to turn right or left (that is, the guidance marker) if the reference marker is output after the guidance marker. As a result, there is no possibility that the junction near the reference marker will be incorrectly identified as the guidance junction.

In the travel guidance system according to the seventh aspect, when the passage of the movable body through the reference marker will not be completed while the guidance on the guidance junction is being provided, the phrase indicating that the movable body is going to pass through the reference marker is set as the first phrase. This enables the user to correctly determine the reference marker without confusing other markers with the reference marker indicated by the guidance phrase if the intervals between junctions are small as often in, for example, urban areas. As a result, the user can correctly determine the guidance junction.

In the travel guidance system according to the eighth aspect, when the passage of the movable body through the reference marker will be completed while the guidance on the guidance junction is being provided, the phrase indicating that the movable body is passing through the reference marker is set as the first phrase. This enables the user to correctly determine the reference marker without confusing other markers with the reference marker indicated by the guidance phrase if the intervals between junctions are small as often in, for example, urban areas. As a result, the user can correctly determine the guidance junction.

In the travel guidance method according to the ninth aspect, the guidance marker and the reference marker acting as markers used for the guidance on the guidance junction are set, and the guidance on the guidance junction is provided using the guidance including the first phrase specifying the positional relationship between the movable body and the reference marker and the second phrase specifying the positional relationship between the reference marker and the guidance marker. The guidance enables the user to easily determine the position of the guidance marker on the basis of the reference marker if the guidance marker is far from the user or if a large number of markers exist. As a result, the user can correctly determine the guidance junction from the markers.

In the computer program product according to the tenth aspect, the guidance marker and the reference marker acting as markers used for the guidance on the guidance junction are set, and the guidance on the guidance junction is provided using the guidance including the first phrase specifying the positional relationship between the movable body and the reference marker and the second phrase specifying the positional relationship between the reference marker and the guidance marker. The guidance enables the user to easily determine the position of the guidance marker on the basis of the reference marker if the guidance marker is far from the user or if a large number of markers exist. As a result, the user can correctly determine the guidance junction from the markers.

### BRIEF DESCRIPTION OF THE DRAWINGS

FIG. 1 is a block diagram of a navigation system 1 according to an embodiment;
FIG. 2 illustrates example data relating to markers installed at junctions;
FIG. 3 is a flow chart of a junction guiding program according to the embodiment;
FIG. 4 is a flow chart of a subprocess program of a guidance setting process according to the embodiment;
FIG. 5 illustrates example guidance phrases to be generated;
FIG. 6 is a flow chart of a subprocess program of a reference-marker setting process according to the embodiment;
FIG. 7 is a flow chart of a subprocess program of a guidance-marker setting process according to the embodiment;
FIG. 8 illustrates a method of setting a reference marker and a guidance marker;
FIG. 9 is a flow chart of a subprocess program of a first-phrase determination process according to the embodiment; and
FIG. 10 is a flow chart of a subprocess program of a second-phrase determination process according to the embodiment.

### DETAILED DESCRIPTION OF THE EMBODIMENTS

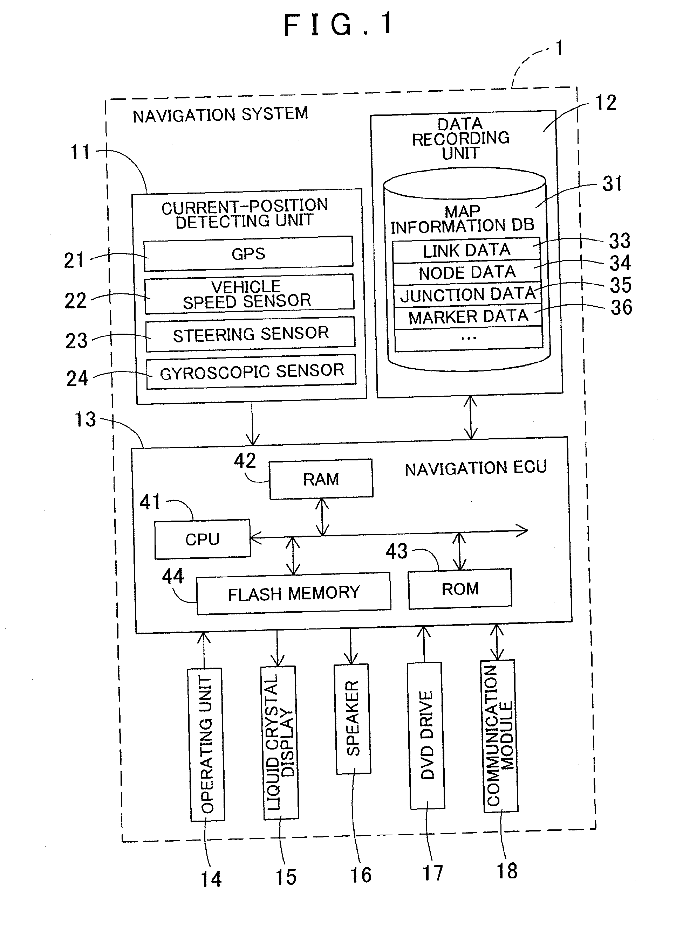

An embodiment of a travel guidance system (a travel guidance apparatus), embodied as a navigation system, will now be described in detail with reference to the drawings. First, the structure of a navigation system 1 according to this embodiment will be schematically described with reference to FIG. 1. FIG. 1 is a block diagram of the navigation system 1 according to this embodiment.

As illustrated in FIG. 1, the navigation system 1 according to this embodiment includes a current-position detecting unit 11 that detects the current position of a vehicle in which the navigation system 1 is installed, a data recording unit 12 that records various data, a navigation electronic control unit (ECU) 13 that performs various calculations on the basis of input information, an operating unit 14 that receives operations from users, a liquid crystal display 15 that displays maps near the vehicle and facility information relating to facilities for the users, a speaker 16 that outputs voice guidance on navigation routes, a DVD drive 17 that reads DVDs serving as storage media, and a communication module 18 that communicates with information centers such as probe centers and the Vehicle Information and Communication System (VICS; registered trademark in Japan) center.

Components that constitute the navigation system 1 will now be described in sequence.
The current-position detecting unit 11 includes, for example, a GPS 21, a vehicle speed sensor 22, a steering sensor 23, and a gyroscopic sensor 24 to detect the current position, the orientation, and the travel speed of the vehicle, the current time, and other parameters. In particular, the vehicle speed sensor 22 detects the travel distance and the speed of the vehicle, and generates pulses in accordance with the rotation of driving wheels of the vehicle to output pulse signals to the navigation ECU 13. The navigation ECU 13 counts the generated pulses to calculate the rotational speed of the driving wheels and the travel distance. The navigation system 1 does not need to include all the five sensors described above, and may include only one or more sensors among the five sensors.

The data recording unit 12 includes a hard disk (not illustrated) and a recording head (not illustrated). The hard disk serves as an external storage device and a recording medium, and the recording head serves as a driver for reading, for example, a map information database (DB) 31 and predetermined programs recorded in the hard disk and for writing predetermined data into the hard disk. The data recording unit 12 may include optical disks such as memory cards, CDs, and DVDs instead of the hard disk.

The map information DB 31 is a storage unit that stores, for example, link data 33 relating to roads (links), node data 34 relating to nodes, junction data 35 relating to junctions, marker data 36 relating to markers, point data relating to points such as facilities, map display data for displaying maps, route search data for searching for routes, and point search data for searching for points.

The link data 33 includes, for example, link IDs used to identify the links, end node information used to determine nodes located at the ends of the links, and the types and the numbers of traffic lanes of the roads that constitute the links. The node data 34 includes, for example, node IDs used to identify the nodes, the positional coordinates of the nodes, and target node information used to determine target nodes to which the nodes are connected via the links. The junction data 35 includes, for example, relevant node information used to determine nodes that form junctions (intersections) and connected link information used to determine links connected to the junctions (herein after referred to as "connected links").

The marker data 36 includes objects that can act as markers used for guidance on a guidance junction (hereinafter referred to as "marker object candidates"). The marker object candidates include, for example, junctions, traffic lights, and landmarks. The landmarks include, for example, facilities such as convenience stores, gas stations, and fast-food restaurants, signboards of these facilities, and structures such as pedestrian bridges, which can be identified from a distance. The marker data 36 includes, for each of the marker object candidates in the country, the type (name) and the positional coordinates of the marker object candidate and an identifier (ID) used to identify a junction near the marker object candidate, if any. Among the marker object candidates, however, junctions are stored in the junction data 35. The landmarks may include only those located within a predetermined range (for example, within a 100-meter radius) from junctions.

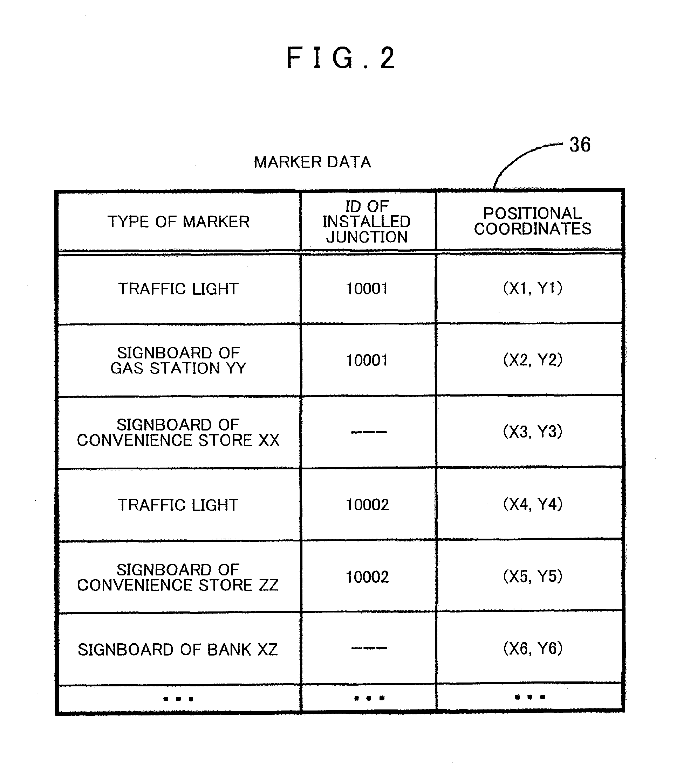

FIG. 2 illustrates example marker data 36 stored in the map information DB 31. As illustrated in FIG. 2, the marker data 36 incudes, for each marker object candidate, the type (name) and the positional coordinates of the marker object candidate and an ID used to identify a junction near the marker object candidate, if any. The type, the positional coordinates, and the ID are associated with each other.
For example, a traffic light serving as a marker object candidate is installed at a junction with an ID "10001", and the installation position is (X1, Y1). In addition, a "signboard of Convenience Store XX" serving as a marker object candidate is installed at (X3, Y3). The marker data 36 similarly includes information relating to other marker object candidates. In cases where a plurality of traffic lights are installed at a junction, the marker data 36 may include information relating to each traffic lights, or may include only information relating to a specific traffic light. For example, the marker data 36 may include only information relating to the farthest traffic light for each direction along which the vehicle leaves the corresponding junction, that is, the last traffic light visible to the user when the vehicle passes through the junction (hereinafter referred to as an "exit-side traffic light"). Alternatively, the marker data 36 may include only information relating to the nearest (in other words, closest to the departure place) traffic light for each direction along which the vehicle enters the corresponding junction, that is, the first traffic light visible to the user when the vehicle enters the junction (hereinafter referred to as an "access-side traffic light").

Among voice phrases used for voice guidance on the guidance junction, the marker data 36 includes voice phrases enabling the user to determine the marker object candidates for each type of the marker object candidates. For example, the marker data 36 includes a phrase such as 'at the Convenience Store XX' as a voice phrase enabling the user to determine the "signboard of Convenience Store XX" serving as a marker object candidate, and a phrase such as 'at the traffic light' as a voice phrase enabling the user to determine the "traffic light" serving as a marker object candidate. The marker data 36 similarly includes voice phrases for other marker object candidates.
The navigation ECU 13 sets a reference marker and a guidance marker used for guidance on the guidance junction in front of the vehicle in the direction of travel on the basis of the marker data 36 stored in the map information DB 31 as described below. Subsequently, the guidance on the guidance junction in front of the vehicle in the direction of travel is set on the basis of the reference marker and the guidance marker. The guidance junction herein refers to a junction at which the user is instructed to, for example, turn right or left while the navigation system 1 provides travel guidance along the navigation route set in the navigation system 1.

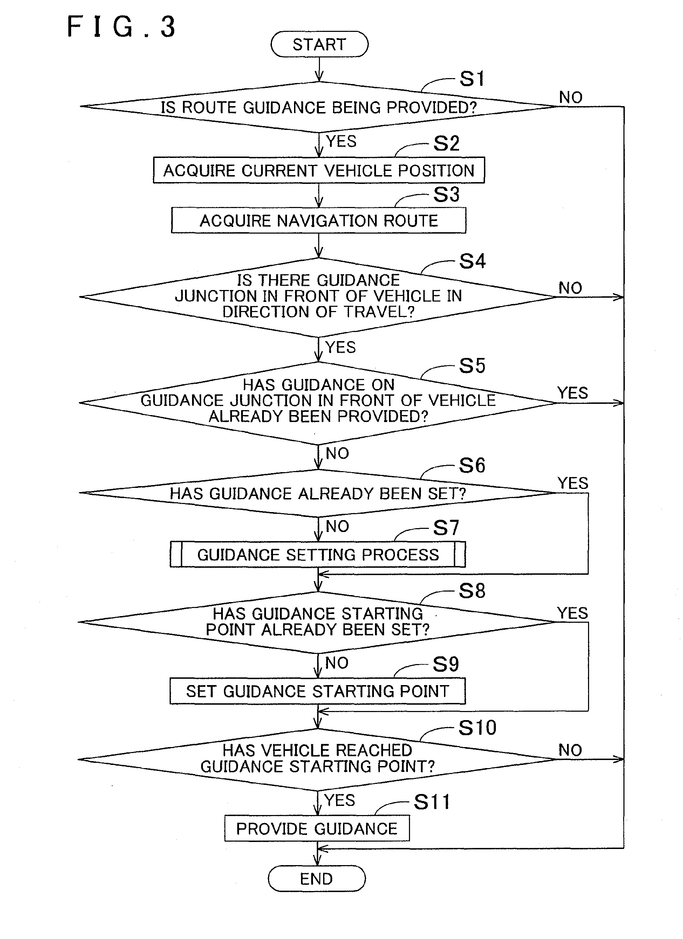

The navigation ECU 13 controls the entire navigation system 1. The navigation ECU 13 includes a CPU 41 and internal storage devices. The CPU 41 serves as a computing device and a control device. The internal storage devices include, for example, a RAM 42 that serves as a working memory used when the CPU 41 performs various computations and that stores data such as route data obtained when routes are searched for, a ROM 43 in which programs for control, a junction guiding program (described below; see FIGS. 3, 4, 6, 7, 9 and 10), and other programs are recorded, and a flash memory 44 that stores the programs read from the ROM 43. Herein, the navigation ECU 13 includes various units serving as processing algorithms. For example, a navigation-route setting unit sets a navigation route from a departure place, for example, the current position of the vehicle (movable body), to a destination and a guidance junction, with which the vehicle is guided along the navigation route. A reference-marker setting unit sets a reference marker that is located closer to the departure place of the navigation route than the guidance junction and that acts as a marker used for guidance on the guidance junction. A guidance-marker setting unit sets a guidance marker that is located near the guidance junction and that acts as a marker used for the guidance on the guidance junction. A marker-position acquiring unit acquires the position of the reference marker and that of the guidance marker. A guidance setting unit sets the guidance on the guidance junction on the basis of the position of the reference marker and that of the guidance marker. A junction guiding unit provides the guidance on the guidance junction on the basis of the guidance set by the guidance setting unit.

The operating unit 14 includes operating switches (not illustrated) such as various keys and buttons, and is operated when, for example, the user inputs a departure place serving as a travel starting point and a destination serving as a travel endpoint. The navigation ECU 13 performs control to execute various operations corresponding to switching signals output, for example, when the switches are pushed down. The operating unit 14 may include a touch panel disposed on the front surface of the liquid crystal display 15. In addition, the operating unit 14 may include a microphone and a voice recognition device.

The liquid crystal display 15 displays, for example, map images including roads, traffic information, operation guidance, operation menus, key guidance, a navigation route from the departure place to the destination, guidance along the navigation route, news, weather forecasts, time, email messages, and television programs. In particular, in this embodiment, when the vehicle reaches such a point that the guidance junction is located within a predetermined distance (for example, 300 meters) ahead of the vehicle in the direction of travel, the liquid crystal display 15 displays an enlarged view in the vicinity of the guidance junction and the direction of travel of the vehicle at the guidance junction.

The speaker 16 outputs guidance such as traffic information and voice guidance used to guide the driver along the navigation route on the basis of instructions issued from the navigation ECU 13. In particular, in this embodiment, in cases where the guidance junction exists in front of the vehicle in the direction of travel, the speaker 16 outputs voice guidance on the guidance junction at predetermined guidance starting timings based on the details of the guidance. For example, voice guidance such as "turn left at the second traffic light following the traffic light directly ahead" is output when the vehicle reaches a point 100 meters short of a traffic light acting as a reference marker.

The DVD drive 17 can read data recorded in recording media such as DVDs and CDs. For example, reproduction of music and video and update of the map information DB 31 are carried out on the basis of the data read by the DVD drive 17.

The communication module 18 is a communication device that receives traffic information including congestion information, restriction information, and traffic accident information transmitted from traffic information centers such as the VICS center and probe centers. The communication module 18 corresponds to, for example, a cellular phone or a data communication module (DCM).

The junction guiding program executed by the navigation ECU 13 in the navigation system 1 having the above-described configuration will now be described with reference to FIG. 3. FIG. 3 is a flow chart of the junction guiding program according to this embodiment. Herein, the junction guiding program is a program to provide the guidance on the guidance junction on the navigation route, and is repeatedly executed at predetermined intervals (for example, each time the current vehicle position is detected) after the power to accessories (ACC) of the vehicle is turned on. The program illustrated in the flow charts in FIGS. 3, 4, 6, 7, 9, and 10 are stored in, for example, the RAM 42 or the ROM 43 included in the navigation system 1, and executed by the CPU 41.

In Step 1 of the junction guiding program, the CPU 41 determines whether or not route guidance based on a navigation route set in the navigation system 1 is being provided. In the following description, "Step" is abbreviated as "S". The navigation route is a recommended route from a departure place (for example, the current vehicle position) to a destination selected by the user, and is set on the basis of route search results. Route search is performed on the basis of, for example, well-known Dijkstra's algorithm using, for example, the link data 33 and the node data 34 stored in the map information DB 31 and traffic information acquired from the VICS center.

If it is determined that the route guidance based on the navigation route set in the navigation system 1 is being provided (Yes in S1), the process proceeds to S2. If it is determined that the route guidance based on the navigation route set in the navigation system 1 is not being provided (No in S1), the junction guiding program is ended.

In S2, the CPU 41 acquires the current vehicle position from results detected by the current-position detecting unit 11. The current-position detecting unit 11 also performs map matching in which the current vehicle position on map data is determined. It is desirable that the current vehicle position be accurately determined using a high-precision location technology. The high-precision location technology herein enables detection of cruising lanes and the highly accurate position of the vehicle by detecting information relating to white lines and road surface paintings captured by a camera attached to the rear of the vehicle using image recognition and by comparing the information with the map information DB in which information relating to white lines and road surface paintings is stored in advance. Details of the high-precision location technology are omitted since it is already in the public domain.

In S3, the CPU 41 acquires the navigation route (including a guidance junction on the navigation route) set in the navigation system 1.

In S4, the CPU 41 determines whether or not the guidance junction exists in front of the vehicle in the direction of travel within a predetermined distance (for example, 1.47 kilometers) from the current vehicle position acquired in S2 and the navigation route acquired in S3. As described above, the guidance junction refers to a junction at which the user is instructed to, for example, turn left or right while the navigation system 1 provides travel guidance according to the navigation route set in the navigation system 1.

If it is determined that the guidance junction exists in front of the vehicle in the direction of travel within a predetermined distance (Yes in S4), the process proceeds to S5. If it is determined that the guidance junction does not exist in front of the vehicle in the direction of travel within a predetermined distance (No in S4), the junction guiding program is ended.

In S5, the CPU 41 determines whether or not guidance on the guidance junction in front of the vehicle in the direction of travel has already been provided. In particular, in S5, it is determined whether or not a voice guidance instruction to, for example, turn right or left at the guidance junction has been provided among the guidance instructions on the guidance junction.

If it is determined that the guidance on the guidance junction in front of the vehicle in the direction of travel has already been provided (Yes in S5), the junction guiding program is ended. If it is determined that the guidance on the guidance junction in front of the vehicle in the direction of travel has not been provided yet (No in S5), the process proceeds to S6.

In S6, the CPU 41 determines whether or not the guidance on the guidance junction in front of the vehicle in the direction of travel has already been set in a guidance setting process (S7; described below). In S6, it is determined whether or not, in particular, a voice guidance instruction to, for example, turn right or left at the guidance junction among the guidance instructions on the guidance junction has been set.

If it is determined that the guidance on the guidance junction in front of the vehicle in the direction of travel has already been set (Yes in S6), the process proceeds to S8. If it is determined that the guidance on the guidance junction in front of the vehicle in the direction of travel has not been set yet (No in S6), the process proceeds to S7.

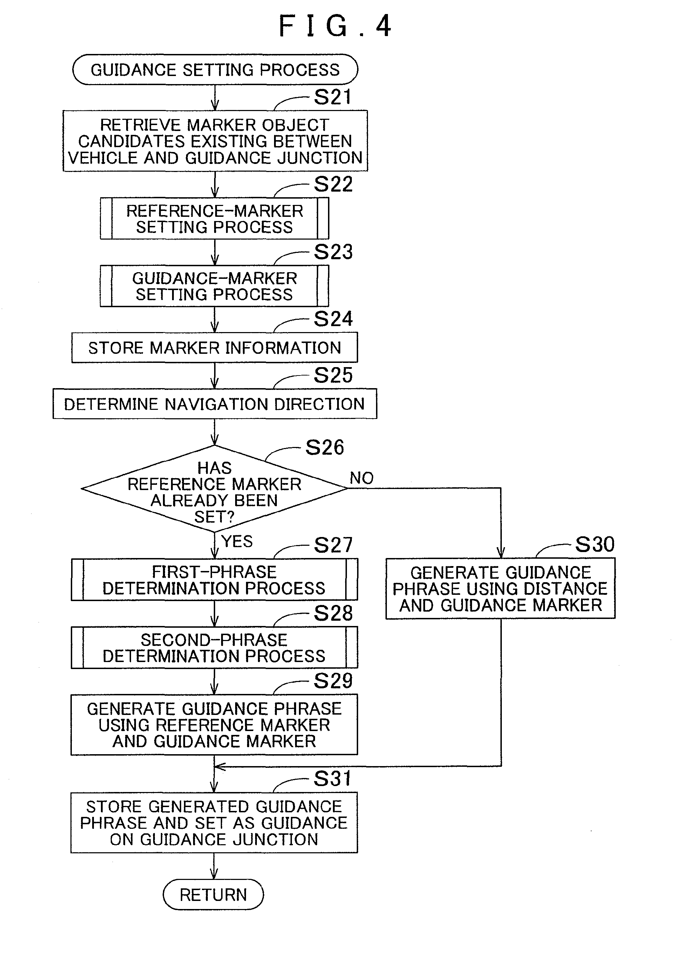

In S7, the CPU 41 performs the guidance setting process (FIG. 4; described below). As described below, the guidance setting process sets the reference marker and the guidance marker, and generates an optimum guidance phrase for the guidance on the guidance junction in front of the vehicle in the direction of travel on the basis of the reference marker and the guidance marker to set the guidance phrase for the guidance.

In S8, the CPU 41 determines whether or not a guidance starting point, at which the guidance on the guidance junction in front of the vehicle in the direction of travel set in S7 is provided, has already been set in S9 (described below). The guidance starting point is used to determine the timing of starting the guidance in the vehicle as described below, and the CPU 41 performs control such that the guidance on the guidance junction is provided when the vehicle reaches the guidance starting point.

If it is determined that the guidance starting point at which the guidance on the guidance junction in front of the vehicle in the direction of travel is to be provided has already been set (Yes in S8), the process proceeds to S10. If it is determined that the guidance starting point at which the guidance on the guidance junction in front of the vehicle in the direction of travel is to be provided has not been set yet (No in S8), the process proceeds to S9.

In S9, the CPU 41 sets the guidance starting point at which the guidance on the guidance junction in front of the vehicle in the direction of travel set in S7 is provided. The guidance starting point can be set as appropriate in accordance with, for example, the details of the guidance phrase and the distance to the guidance junction, and may be set at, for example, a point a predetermined distance (for example, 100 meters) short of an object (for example, a traffic light, an intersection, or a landmark such as a store, a signboard of a store, and a structure) set as the reference marker. If it is determined that the guidance that is started when the vehicle reaches the set guidance starting point cannot be finished within an appropriate duration (for example, by the time the vehicle reaches the guidance marker), it is desirable that the guidance be not provided or that the guidance be switched to other guidance that does not use markers (for example, guidance using the distance to the guidance junction).

In S10, the CPU 41 determines whether or not the vehicle has reached the guidance starting point set in S9.

If it is determined that the vehicle has reached the guidance starting point set in S9 (Yes in S10), the process proceeds to S11. If it is determined that the vehicle has not reached the guidance starting point set in S9 yet (No in S10), the junction guiding program is ended.

In S11, the CPU 41 provides the guidance on the guidance junction on the basis of the guidance candidates set for the guidance in S7. Specifically, the CPU 41 provides guidance for determining the guidance junction and guidance for determining an exit direction along which the vehicle leaves the guidance junction (that is, guidance for determining an exit road that the vehicle enters after leaving the guidance junction). For example, in cases where a traffic light is set as the reference marker and the guidance marker in S7, where the number of traffic lights (or junctions at which traffic lights are installed) existing between the reference marker and the guidance marker (excluding the reference marker and including the guidance marker) is two, and where passage of the vehicle through the reference marker will not be completed during guidance, a phrase such as "turn left (right) at the second traffic light following the traffic light directly ahead" is output from the speaker 16 when the vehicle reaches the guidance starting point. Furthermore, when the vehicle reaches a point within a predetermined distance (for example, 300 meters) from the guidance junction, the liquid crystal display 15 displays an enlarged view of the vicinity of the guidance junction and the direction of travel of the vehicle at the guidance junction.
This enables the user to correctly determine the guidance junction and the exit road that the vehicle enters after leaving the guidance junction.

Next, subprocesses of the guidance setting process performed in S7 will be described with reference to FIG. 4. FIG. 4 is a flow chart of a subprocess program of the guidance setting process.

In S21, the CPU 41 retrieves marker object candidates existing between the current vehicle position and the guidance junction along the navigation route (including the area around the guidance junction) from the map information DB 31. The marker object candidates herein refer to objects that can act as markers when the guidance on the guidance junction is provided, and correspond to, for example, traffic lights, intersections, and landmarks (stores, signboards of stores, and structures). Information (types, positional information, and the like) relating to marker object candidates in the country is stored in the marker data 36 in the map information DB 31 in advance (see FIG. 2).

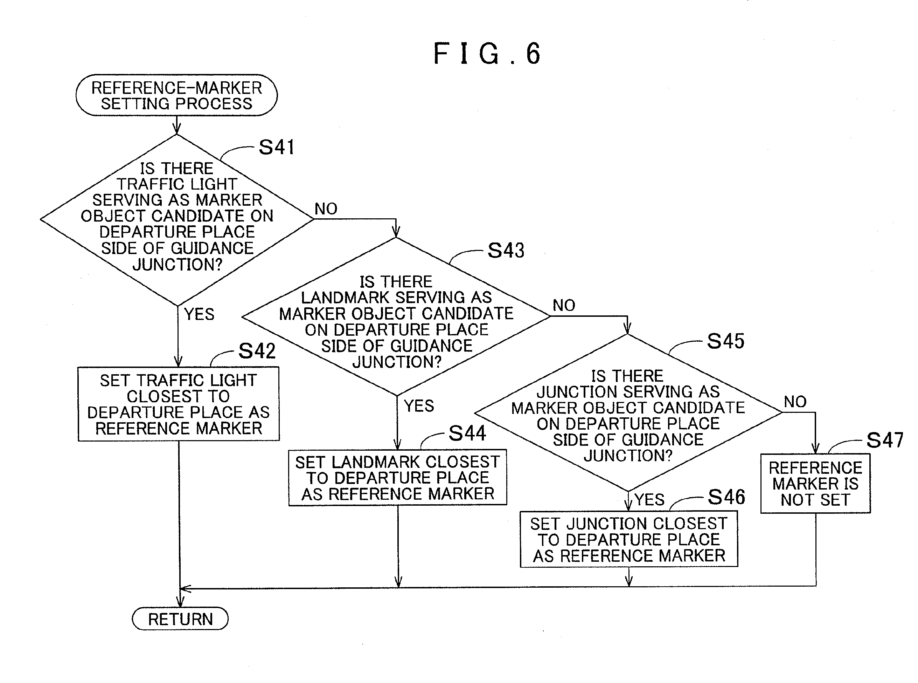

In S22, the CPU 41 performs a reference-marker setting process (FIG. 6; described below). The reference-marker setting process selects a marker object candidate that is located closer to the departure place of the navigation route than the guidance junction and that acts as a marker used for the guidance on the guidance junction from the marker object candidates retrieved in S21, and sets the marker object candidate as a reference marker.

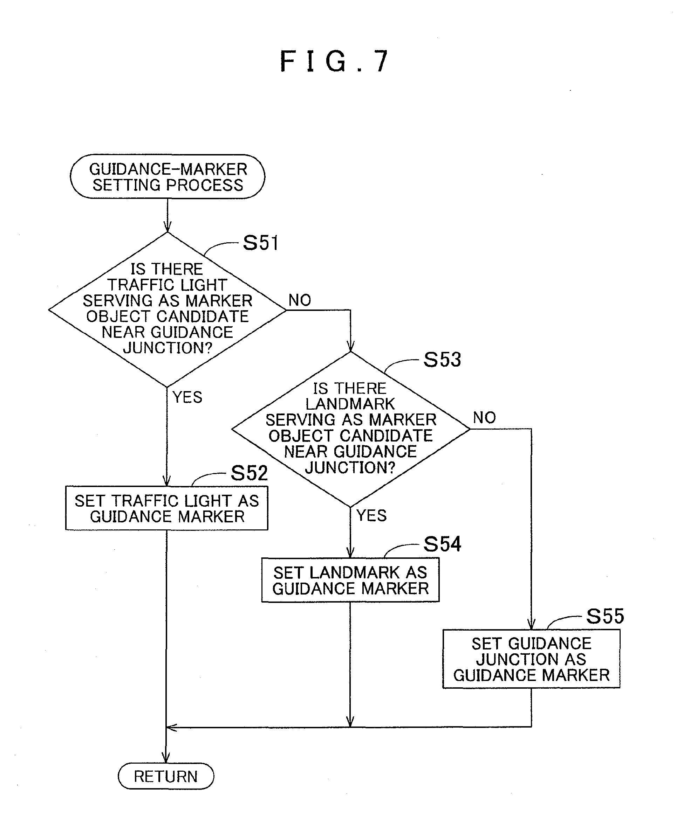

In S23, the CPU 41 performs a guidance-marker setting process (FIG. 7; described below). The guidance-marker setting process selects a marker object candidate that is located near the guidance junction and that acts as a marker used for the guidance on the guidance junction from the marker object candidates retrieved in S21, and sets the marker object candidate as a guidance marker.

In S24, the CPU 41 reads information (types, positional information, IDs of junctions at which the markers are installed, and the like) relating to the reference marker set in S22 and the guidance marker set in S23 from the map information DB 31, and stores the information in, for example, the RAM 42.

In S25, the CPU 41 determines a navigation direction at the guidance junction in front of the vehicle in the direction of travel (that is, exit direction along which the vehicle leaves the guidance junction) from the navigation route acquired in S3 and the map information. The navigation direction may include, for example, right (left), diagonally right (left), and sharp right (left).

In S26, the CPU 41 determines whether or not a reference marker is set in the reference-marker setting process in S22.

If it is determined that a reference marker is set (Yes in S26), the process proceeds to S27. If it is determined that no reference marker is set (No in S26), the process proceeds to S30.

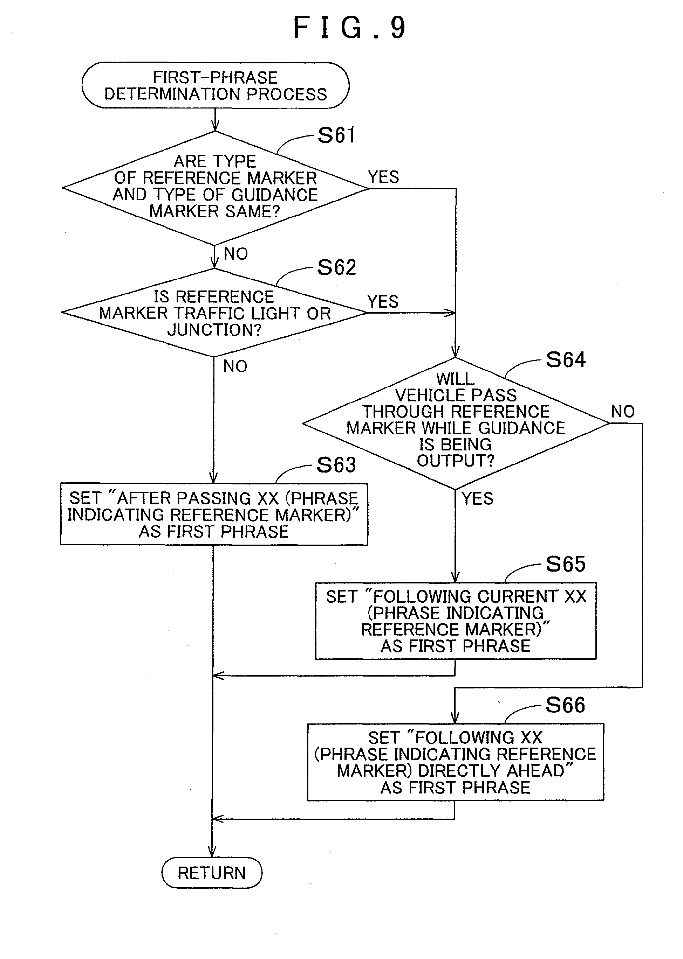

In S27, the CPU 41 performs a first-phrase determination process (FIG. 9; described below). The first-phrase determination process determines a first phrase specifying the positional relationship between the vehicle and the reference marker from the reference marker set in S22. As described below, a guidance phrase used for the guidance on the guidance junction is generated on the basis of the combination of the first phrase determined in S27 and a second phrase determined in S28 (described below), and the guidance on the guidance junction in front of the vehicle in the direction of travel is set on the basis of the generated guidance phrase.

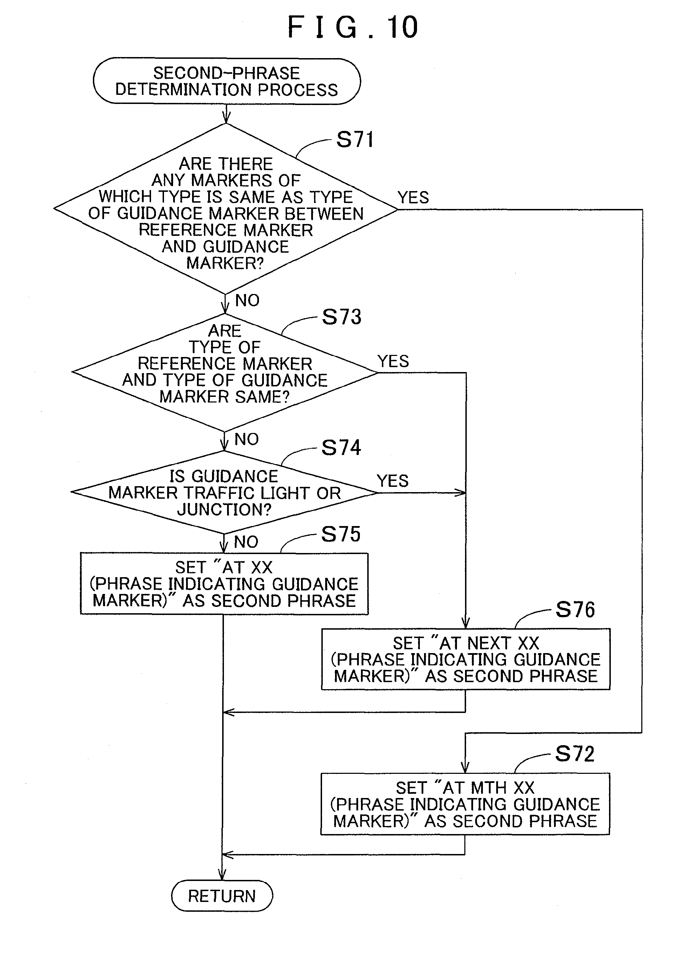

In S28, the CPU 41 performs a second-phrase determination process (FIG. 10; described below). The second-phrase determination process determines the second phrase specifying the positional relationship between the reference marker and the guidance marker from the reference marker set in S22 and the guidance marker set in S23.

In S29, the CPU 41 generates the guidance phrase used for the guidance on the guidance junction on the basis of the combination of the first phrase determined in S27, the second phrase determined in S28, and a phrase indicating the navigation direction (hereinafter referred to as "navigation-direction phrase") determined in S25. Specifically, the guidance phrase used for the guidance on the guidance junction is generated by connecting the first phrase and the second phrase such that the first phrase is output after the second phrase and by adding the navigation-direction phrase before the first and second phrases.

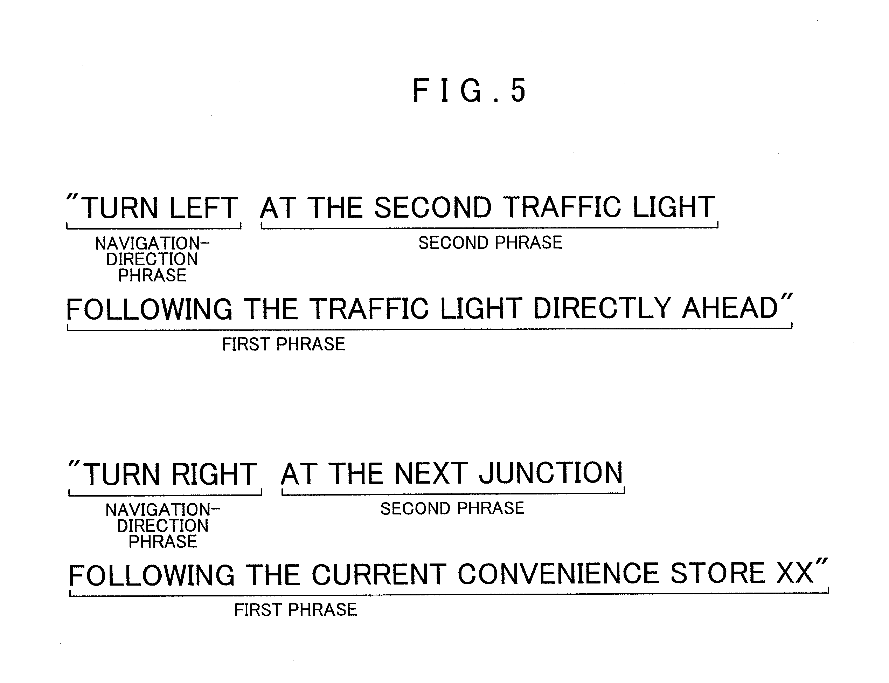

For example, in cases where a phrase such as "following the traffic light directly ahead" is set as the first phrase, a phrase such as "at the second traffic light" is set as the second phrase, and a phrase such as "turn left" is set as the navigation-direction phrase, the guidance phrase generated in S29 results in "turn left at the second traffic light following the traffic light directly ahead" as illustrated in FIG. 5. As a result, the user who heard the guidance phrase can determine that the guidance junction is the second junction beyond the traffic light the vehicle is going to pass through and that the user needs to turn left at the guidance junction.

In addition, in cases where a phrase such as "following the current Convenience Store XX" is set as the first phrase, a phrase such as "at the next junction" is set as the second phrase, and a phrase such as "turn right" is set as the navigation-direction phrase, the guidance phrase generated in S29 results in "turn right at the next junction following the current Convenience Store XX" as illustrated in FIG. 5. As a result, the user who heard the guidance phrase can determine that the guidance junction is the next junction beyond the 'Convenience Store XX' serving as a facility the vehicle is passing through at the moment and that the user needs to turn right at the guidance junction.

Meanwhile, in S30, the CPU 41 generates the guidance phrase used for guidance on the guidance junction on the basis of the guidance marker set in S23, the distance between the vehicle and the guidance marker, and the navigation-direction phrase. Specifically, the guidance phrase used for guidance on the guidance junction is generated by adding the navigation-direction phrase before the phrases specifying the distance between the vehicle and the guidance marker and the type of the guidance marker.

For example, in cases where the guidance marker is a traffic light and where a phrase such as "turn left" is set as the navigation-direction phrase, the guidance phrase generated in S30 results in "turn left at the traffic light 700 meters (or 300 meters) ahead". As a result, the user who heard the guidance phrase can determine that the guidance junction is the junction 700 meters (or 300 meters) ahead at which traffic lights are installed and that the user needs to turn left at the guidance junction. In cases where the guidance phrase is generated in S30, the guidance starting point is set at a point determined from the distance indicated in the guidance phrase (for example, a point 750 meters short of the guidance marker).

In S31, the CPU 41 stores the guidance phrase generated in S29 or in S30 in, for example, the RAM 42, and sets the guidance during which the guidance phrase is output as the guidance on the guidance junction in front of the vehicle in the direction of travel. The process then proceeds to S8.

Next, subprocesses of the reference-marker setting process performed in S22 will be described with reference to FIG. 6. FIG. 6 is a flow chart of a subprocess program of the reference-marker setting process.

In S41, the CPU 41 determines whether or not a traffic light serving as a marker object candidate is located closer to the departure place of the navigation route than the guidance junction from the marker object candidates retrieved in S21. The objects to be determined do not include traffic lights near the guidance junction (for example, traffic lights installed at the guidance junction).

If it is determined that a traffic light serving as a marker object candidate is located closer to the departure place of the navigation route than the guidance junction (Yes in S41), the process proceeds to S42. If it is determined that no traffic light serving as a marker object candidate is located closer to the departure place of the navigation route than the guidance junction (No in S41), the process proceeds to S43.

In S42, the CPU 41 sets the traffic light located closer to the departure place of the navigation route than the guidance junction as the reference marker. If there are a plurality of applicable traffic lights, the traffic light closest to the departure place is set as the reference marker. The process then proceeds to S23.

In S43, the CPU 41 determines whether or not a landmark (for example, a store, a signboard of a store, or a structure) serving as a marker object candidate is located closer to the departure place of the navigation route than the guidance junction from the marker object candidates retrieved in S21. The objects to be determined do not include landmarks near the guidance junction (for example, within 50 meters).

If it is determined that a landmark serving as a marker object candidate is located closer to the departure place of the navigation route than the guidance junction (Yes in S43), the process proceeds to S44. If it is determined that no landmark serving as a marker object candidate is located closer to the departure place of the navigation route than the guidance junction (No in S43), the process proceeds to S45.

In S44, the CPU 41 sets the landmark located closer to the departure place of the navigation route than the guidance junction as the reference marker. If there are a plurality of applicable landmarks, the landmark closest to the departure place is set as the reference marker. The process then proceeds to S23.

In S45, the CPU 41 determines whether or not a junction serving as a marker object candidate is located closer to the departure place of the navigation route than the guidance junction from the marker object candidates retrieved in S21. The objects to be determined do not include the guidance junction.

If it is determined that a junction serving as a marker object candidate is located closer to the departure place of the navigation route than the guidance junction (Yes in S45), the process proceeds to S46. If it is determined that no junction serving as a marker object candidate is located closer to the departure place of the navigation route than the guidance junction (No in S45), the process proceeds to S47.

In S46, the CPU 41 sets the junction located closer to the departure place of the navigation route than the guidance junction as the reference marker. If there are a plurality of applicable junctions, the junction closest to the departure place is set as the reference marker. The process then proceeds to S23. Meanwhile, the CPU 41 does not set the reference marker in S47, and the process proceeds to S23.

Next, subprocesses of the guidance-marker setting process performed in S23 will be described with reference to FIG. 7. FIG. 7 is a flow chart of a subprocess program of the guidance-marker setting process.

In S51, the CPU 41 determines whether or not a traffic light serving as a marker object candidate is located near the guidance junction from the marker object candidates retrieved in S21, that is, whether or not a traffic light is installed at the guidance junction.

If it is determined that a traffic light serving as a marker object candidate is located near the guidance junction (Yes in S51), the process proceeds to S52. If it is determined that no traffic light serving as a marker object candidate is located near the guidance junction (No in S51), the process proceeds to S53.

In S52, the CPU 41 sets the traffic light near the guidance junction as the guidance marker. If there are a plurality of applicable traffic lights, the traffic light closest to the departure place (access-side traffic light) is set as the guidance marker. The process then proceeds to S24.

In S53, the CPU 41 determines whether or not a landmark (for example, a store, a signboard of a store, or a structure) serving as a marker object candidate is located near the guidance junction (for example, within 50 meters) from the marker object candidates retrieved in S21.

If it is determined that a landmark serving as a marker object candidate is located near the guidance junction (Yes in S53), the process proceeds to S54. If it is determined that no landmark serving as a marker object candidate is located near the guidance junction (No in S53), the process proceeds to S55.

In S54, the CPU 41 sets the landmark near the guidance junction as the guidance marker. If there are a plurality of applicable landmarks, the landmark closer to the departure place and on the navigation-direction side is preferentially set as the guidance marker. The process then proceeds to S24.

Meanwhile, in S55, the CPU 41 sets the guidance junction as the guidance marker. The process then proceeds to S24.

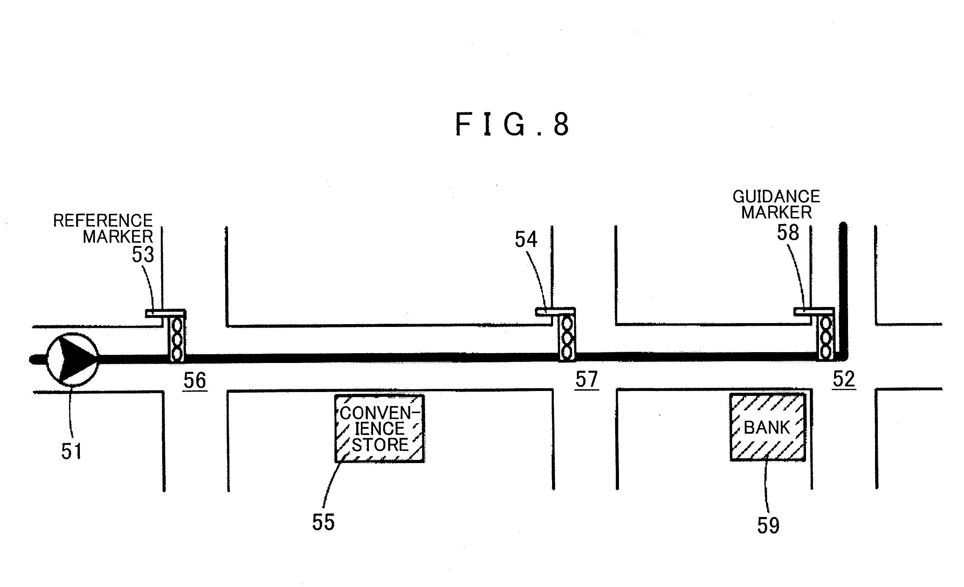

As a result, as illustrated in, for example, FIG. 8, in cases where a guidance junction 52 exists in front of a vehicle 51 in the direction of travel and where traffic lights 53 and 54, a landmark 55, and junctions 56 and 57 serving as marker object candidates are located closer to the departure place of the navigation route than the guidance junction 52, the traffic light 53 is set as the reference marker. In cases where a traffic light 58 and a landmark 59 are located near the guidance junction 52, the traffic light 58 is set as the guidance marker.

Next, subprocesses of the first-phrase determination process performed in S27 will be described with reference to FIG. 9. FIG. 9 is a flow chart of a subprocess program of the first-phrase determination process.

In S61, the CPU 41 determines whether or not the type of the reference marker set in S22 and that of the guidance marker set in S23 are the same. The types of the markers include, for example, traffic lights, landmarks, and junctions.

If it is determined that the type of the reference marker set in S22 and that of the guidance marker set in S23 are the same (Yes in S61), the process proceeds to S64. If it is determined that the type of the reference marker set in S22 and that of the guidance marker set in S23 are not the same (No in S61), the process proceeds to S62.

In S62, the CPU 41 determines whether or not the reference marker set in S22 is a traffic light or a junction.

If it is determined that the reference marker set in S22 is a traffic light or a junction (Yes in S62), the process proceeds to S64. If it is determined that the reference marker set in S22 is neither a traffic light nor a junction (No in S62), for example, if it is determined that the reference marker is a landmark, the process proceeds to S63.

In S63, the CPU 41 sets a phrase such as "after passing through XX (phase indicating the reference marker)" as the first phrase. That is, the first phrase set in S63 indicates the type of the reference marker in front of the vehicle. Since the type of the reference marker and that of the guidance marker are not the same and the marker closest to the departure place (that is, closest to the vehicle) is set as the reference marker among the markers of which type is the same as that of the reference marker, guidance on only the type of the reference marker enables the user to reliably determine the reference marker. In addition, since the reference marker is neither a traffic light nor a junction, there is no possibility that the reference marker will be incorrectly identified as the marker at which the user is instructed to turn right or left (guidance marker), that is, there is no possibility that the junction near the reference marker will be incorrectly identified as the guidance junction if the reference marker is output after the guidance marker without adding a phrase indicating that the vehicle is passing or is going to pass through the reference marker (for example, a phrase such as "current" or "directly ahead") before or after the phrase specifying the type of the reference marker.

Meanwhile, in S64, the CPU 41 determines whether or not the vehicle will pass through the reference marker set in S22 while the guidance is being output after the output of the guidance is started at the guidance starting point (for example, a point a predetermined distance short of the reference marker).

If it is determined that the vehicle will pass through the reference marker set in S22 while the guidance is being output (Yes in S64), the process proceeds to S65. If it is determined that the vehicle will not pass through the reference marker set in S22 while the guidance is being output (No in S64), that is, if it is determined that the output of the guidance will be finished before the vehicle passes through the reference marker or while the vehicle is passing through the reference marker, the process proceeds to S66.

In S65, the CPU 41 sets a phrase such as "following the current XX (phrase indicating the reference marker)" as the first phrase. That is, the first phrase set in S65 indicates the type of the reference marker in front of the vehicle and the positional relationship between the vehicle and the reference marker, more specifically, indicates that the reference marker is a marker through which the vehicle is passing at the moment. Since the marker through which the vehicle passes while the guidance is being provided is the reference marker, addition of the phrase such as "current" enables the user to reliably determine the reference marker if the type of the reference marker and that of the guidance marker are the same. In addition, even if the reference marker is a traffic light or a junction and if the reference marker is output after the guidance marker, addition of the phrase indicating that the vehicle is passing through the reference marker (such as "current") before the phrase specifying the type of the reference marker eliminates the possibility that the reference marker will be incorrectly identified as the marker at which the user is instructed to turn right or left (guidance marker), that is, eliminates the possibility that the junction near the reference marker will be incorrectly identified as the guidance junction.

Meanwhile, in S66, the CPU 41 sets a phrase such as "following the XX (phrase indicating the reference marker) directly ahead" as the first phrase. That is, the first phrase set in S66 indicates the type of the reference marker in front of the vehicle and the positional relationship between the vehicle and the reference marker, more specifically, indicates that the reference marker is a marker the vehicle is going to pass through. Since the first marker the vehicle passes through after the guidance is provided is the reference marker, addition of the phrase such as "directly ahead" enables the user to reliably determine the reference marker if the type of the reference marker and that of the guidance marker are the same. In addition, even if the reference marker is a traffic light or a junction and if the reference marker is output after the guidance marker, addition of the phrase indicating that the vehicle is going to pass through the reference marker (such as "directly ahead") after the phrase specifying the type of the reference marker eliminates the possibility that the reference marker will be incorrectly identified as the marker at which the user is instructed to turn right or left (guidance marker), that is, eliminates the possibility that the junction near the reference marker will be incorrectly identified as the guidance junction.

Next, subprocesses of the second-phrase determination process performed in S28 will be described with reference to FIG. 10. FIG. 10 is a flow chart of a subprocess program of the second-phrase determination process.

In S71, the CPU 41 determines whether or not other markers of which type is the same as that of the guidance marker exist between the reference marker and the guidance marker.

If it is determined that other markers of which type is the same as that of the guidance marker exist between the reference marker and the guidance marker (Yes in S71), the process proceeds to S72. If it is determined that no marker of which type is the same as that of the guidance marker exists between the reference marker and the guidance marker (No in S71), the process proceeds to S73.

In S72, the CPU 41 sets a phrase such as "at the Mth XX (phrase indicating the guidance marker)" as the second phrase. Herein, M indicates the number of the markers of which type is the same as that of the guidance marker existing between the reference marker and the guidance marker (excluding the reference marker and including the guidance marker). That is, the second phrase set in S72 indicates the type of the guidance marker in front of the vehicle and the positional relationship between the reference marker and the guidance marker. The user can reliably determine the guidance marker from the reference marker by referring to the given value of M if the other markers of which type is the same as that of the guidance marker exist between the reference marker and the guidance marker.

Meanwhile, in S73, the CPU 41 determines whether or not the type of the reference marker set in S22 and that of the guidance marker set in S23 are the same. The types of the markers include, for example, traffic lights, landmarks, and junctions.

If it is determined that the type of the reference marker set in S22 and that of the guidance marker set in S23 are the same (Yes in S73), the process proceeds to S76. If it is determined that the type of the reference marker set in S22 and that of the guidance marker set in S23 are not the same (No in S73), the process proceeds to S74.

In S74, the CPU 41 determines whether or not the guidance marker set in S23 is a traffic light or a junction.

If it is determined that the guidance marker set in S23 is a traffic light or a junction (Yes in S74), the process proceeds to S76. If it is determined that the guidance marker set in S23 is neither a traffic light nor a junction (No in S74), for example, if it is determined that the guidance marker is a landmark, the process proceeds to S75.

In S75, the CPU 41 sets a phrase such as "at the XX (phrase indicating the guidance marker)" as the second phrase. That is, the second phrase set in S75 indicates the type of the guidance marker in front of the vehicle. Guidance on only the type of the guidance marker enables the user to reliably determine the guidance marker from the reference marker, since the type of the reference marker and that of the guidance marker are not the same, no marker of which type is the same as that of the guidance marker exists between the reference marker and the guidance marker, and the guidance marker is neither a traffic light nor a junction.

Meanwhile, in S76, the CPU 41 sets a phrase such as "at the next XX (phrase indicating the guidance marker)" as the second phrase. That is, the second phrase set in S76 indicates the type of the guidance marker in front of the vehicle and the positional relationship between the reference marker and the guidance marker. Since no marker of which type is the same as that of the guidance marker exists between the reference marker and the guidance marker, guidance on the type of the guidance marker and guidance indicating that the guidance marker is next to the reference marker enable the user to reliably determine the guidance marker from the reference marker if the type of the reference marker and that of the guidance marker are the same or if the guidance marker is a traffic light or a junction. The process then proceeds to S29.

In the navigation system 1, the travel guidance method using the navigation system 1, and the computer program executed by the navigation system 1 according to this embodiment described in detail above, a marker object candidate that is located closer to the departure place of the navigation route than the guidance junction and that can act as a marker used for guidance on the guidance junction is selected from the marker object candidates such as junctions, traffic lights, and landmarks, and is set as the reference marker (S22); a marker object candidate that is located near the guidance junction and that can act as a marker used for the guidance on the guidance junction is selected from the marker object candidates, and is set as the guidance marker (S23); guidance including the first phrase specifying the positional relationship between the vehicle and the reference marker and the second phrase specifying the positional relationship between the reference marker and the guidance marker is set as the guidance on the guidance junction in front of the vehicle in the direction of travel (S27 to S29); and guidance on the guidance junction is provided on the basis of the set guidance (S11). The guidance enables the user to easily determine the position of the guidance marker on the basis of the reference marker if the guidance marker is far from the user or if a large number of markers exist. As a result, the user can correctly determine the guidance junction from the marker.
Since the guidance is set such that the first phrase is output after the second phrase, the reference marker and the guidance marker can be easily discriminated from each other, and the user can easily determine the guidance marker on the basis of the reference marker output after the guidance marker.
In cases where a plurality of objects that can be the reference marker are located closer to the departure place of the navigation route than the guidance junction, the object closest to the departure place is set as the reference marker. This enables the user to determine the guidance marker on the basis of the marker most visible to the user.
The first phrase is set such that the type of the reference marker and the positional relationship between the vehicle and the reference marker are determined, and the second phrase is set such that the type of the guidance marker and the positional relationship between the reference marker and the guidance marker are determined. This enables the user to determine the marker more reliably confusing other markers with the reference marker or the guidance marker.
In cases where objects of which type is the same as that of the guidance marker exist between the reference marker and the guidance marker, a phrase specifying the number of the objects existing between the reference marker and the guidance marker is set as the second phrase. This enables the user to reliably determine the guidance marker without confusing other markers with the guidance marker if the other objects of which type is the same as that of the guidance marker exist between the reference marker and the guidance marker.
In cases where the type of the reference marker and that of the guidance marker are the same or in cases where the type of the reference marker and that of the guidance marker are not the same and the guidance marker is a traffic light or a junction, a phrase formed by adding a phrase indicating that the vehicle is passing or is going to pass through the reference marker before or after a phrase specifying the type of the reference marker is set as the first phrase. This eliminates the possibility that the user will incorrectly identify the reference marker as a marker at which the user is instructed to turn right or left (that is, the guidance marker) if the reference marker is output after the guidance marker. As a result, there is no possibility that the user will incorrectly identify junctions near the reference marker as the guidance junction.
In cases where passage of the vehicle through the reference marker will not be completed while the guidance on the guidance junction is being provided, a phrase indicating that the vehicle is going to pass through the reference marker is set as the first phrase. This enables the user to correctly determine the reference marker indicated by the guidance phrase without confusing other markers with the reference marker if the intervals between junctions are small as often in, for example, urban areas. As a result, the user can correctly determine the guidance junction.
In cases where passage of the vehicle through the reference marker will be completed while the guidance on the guidance junction is provided, a phrase indicating that the vehicle is passing through the reference marker at the moment is set as the first phrase. This enables the user to correctly determine the reference marker indicated by the guidance phrase without confusing other markers with the reference marker if the intervals between junctions are small as often in, for example, urban areas. As a result, the user can correctly determine the guidance junction.

The present invention is not limited to the above-described embodiment, and various modifications and equivalents can be made without departing from the spirit and scope of the present invention as a matter of course.
For example, although the navigation system 1 provides guidance on the guidance junction by outputting voice guidance from the speaker 16 in this embodiment, the navigation system 1 may provide guidance by displaying texts on the liquid crystal display 15.

Although the guidance phrase for determining the guidance junction is generated using the two markers of the reference marker and the guidance marker in this embodiment, two or more reference markers or two or more guidance markers may be set, and the guidance phrase may be generated using the two or more reference markers or the two or more guidance markers.

Although the markers include, for example, traffic lights, intersections, landmarks (stores, signboards of stores, and structures) in this embodiment, the markers may include other objects that can act as markers for the user.

Although a phrase specifying the number of markers existing between the reference marker and the guidance marker is used for the phrase specifying the positional relationship between the reference marker and the guidance marker in this embodiment, other phrases may be used. For example, a phrase specifying the distance between the reference marker and the guidance marker may be used.

The present invention may also be incorporated in apparatuses having a function of providing route guidance based on navigation routes in addition to the navigation system. For example, the present invention may be incorporated in, for example, mobile terminals such as cellular phones and PDAs, personal computers, and portable music players (hereinafter referred to as "mobile terminals and the like"). The present invention may also be incorporated in systems including servers and mobile terminals and the like. In this case, either the servers or the mobile terminals and the like may perform each step of the above-described junction guiding program (see FIGS. 3, 4, 6, 7, 9, and 10). In cases where the present invention is incorporated in the mobile terminals and the like, the present invention may be used to guide movable bodies other than vehicles, for example, two-wheeled vehicles and users of the mobile terminals and the like.
A travel guidance system is adapted to set a navigation route and a guidance junction thereon, to set a marker located closer to a departure place of the route than the guidance junction and used for guidance on the guidance junction as a reference marker, to set a marker located near the guidance junction and used for guidance on the guidance junction as a guidance marker, to acquire positions of the reference marker and the guidance marker, to set the guidance on the guidance junction on the basis of the positions of the reference marker and the guidance marker, and to provide the guidance on the guidance junction on the basis of the set guidance, wherein the guidance includes a first phrase specifying a positional relationship between a movable body and the reference marker and a second phrase specifying a positional relationship between the reference marker and the guidance marker.

## Claims

1. A travel guidance system (1) comprising:
a navigation-route setting unit that sets a navigation route along which a movable body (51) is guided and a guidance junction (52) on the navigation route;
a reference-marker setting unit that sets a marker located closer to a departure place of the navigation route than the guidance junction (52) and used for guidance on the guidance junction as a reference marker;
a guidance-marker setting unit that sets a marker located near the guidance junction (52) and used for the guidance on the guidance junction as a guidance marker;
a marker-position acquiring unit that acquires a position of the reference marker and a position of the guidance marker;
a guidance setting unit that sets the guidance on the guidance junction (52) on the basis of the position of the reference marker and the position of the guidance marker; and
a junction guiding unit that provides the guidance on the guidance junction (52) on the basis of the guidance set by the guidance setting unit, wherein
the guidance setting unit sets the guidance including a first phrase specifying a positional relationship between the movable body (51) and the reference marker and a second phrase specifying a positional relationship between the reference marker and the guidance marker.

2. The travel guidance system (1) according to claim 1, wherein the guidance setting unit is adapted to set the guidance such that the first phrase is output after the second phrase.

3. The travel guidance system (1) according to claim 1 or 2, wherein the reference-marker setting unit is adapted to set, when a plurality of objects (53 to 59) that can be the reference marker are located closer to the departure place of the navigation route than the guidance junction (52), the object closest to the departure place as the reference marker.

4. The travel guidance system (1) according to any one of claims 1 to 3, wherein
objects (53 to 59) that can be the reference marker and the guidance marker are classified into a plurality of types, and
the guidance setting unit is adapted to set a phrase specifying a type of the reference marker in addition to the positional relationship between the movable body (51) and the reference marker as the first phrase, and is adapted to set a phrase specifying a type of the guidance marker in addition to the positional relationship between the reference marker and the guidance marker as the second phrase.

5. The travel guidance system (1) according to claim 4, wherein the guidance setting unit is adapted to set, when another object of which type is the same as the type of the guidance marker exists between the reference marker and the guidance marker, a phrase specifying the number of the objects existing between the reference marker and the guidance marker as the second phrase.

6. The travel guidance system (1) according to claim 4 or 5, wherein the guidance setting unit is adapted to set, when the type of the reference marker and the type of the guidance marker are the same or when the type of the reference marker and the type of the guidance marker are not the same and the guidance marker is a traffic light or a junction, a phrase formed by adding a phrase indicating that the movable body (51) is passing or is going to pass through the reference marker before or after a phrase specifying the type of the reference marker as the first phrase.

7. The travel guidance system (1) according to any one of claims 1 to 6, wherein the guidance setting unit is adapted to set, when passage of the movable body (51) through the reference marker will not be completed while the guidance is being provided by the junction guiding unit, a phrase indicating that the movable body (51) is going to pass through the reference marker as the first phrase.

8. The travel guidance system (1) according to any one of claims 1 to 7, wherein the guidance setting unit is adapted to set, when passage of the movable body (51) through the reference marker will be completed while the guidance is being provided by the junction guiding unit, a phrase indicating that the movable body (51) is passing through the reference marker at the moment as the first phrase.

9. A travel guidance method comprising the steps of:
setting a navigation route along which a movable body (51) is guided and a guidance junction (52) on the navigation route;
setting a marker located closer to a departure place of the navigation route than the guidance junction (52) and used for guidance on the guidance junction (52) as a reference marker;
setting a marker located near the guidance junction (52) and used for the guidance on the guidance junction (52) as a guidance marker;
acquiring a position of the reference marker and a position of the guidance marker;
setting the guidance on the guidance junction (52) on the basis of the position of the reference marker and the position of the guidance marker; and
providing the guidance on the guidance junction (52) on the basis of the guidance set in the guidance setting step, wherein
the guidance setting step sets the guidance including a first phrase specifying a positional relationship between the movable body (51) and the reference marker and a second phrase specifying a positional relationship between the reference marker and the guidance marker.

10. A computer program product including a program for a processing device, comprising software code portions for performing the steps according to claim 9 when the program is run on the processing device.

11. The computer program product according to claim 10, wherein the computer program product comprises a computer-readable medium on which the software code portions are stored.

12. The computer program product according to claim 10, wherein the program is directly loadable into an internal memory of the processing device.
